# EUROPEAN PATENT SPECIFICATION

(11) **EP 1 077 517 B1**
(45) Date of publication and mention of the grant of the patent: **06.07.2005**
(21) Application number: 00306607.3
(22) Date of filing: 03.08.2000
(51) Int. Cl.: H02G 15/04, H02G 3/06, F16L 19/02

(54) **Gland assembly**
Stopfbuchsenanordnung
Ensemble de presse-étoupe

(30) Priority: 19.08.1999 GB 9919691
(43) Date of publication of application: 21.02.2001
(73) Proprietor: British Engines Limited, Newcastle-upon-Tyne NE6 1BS (GB)
(72) Inventor: Sowerby, John David, Cramlington, Northumberland NE23 7XE (GB); Graham, Malcolm, c/o CMP Products, Newcatle-upon-Tyne NE6 1BE (GB)
(74) Representative: Copsey, Timothy Graham

(56) References cited:
- EP-A- 0 515 200
- EP-A- 0 587 310
- EP-A- 0 618 655
- GB-A- 960 436
- GB-A- 1 243 572
- GB-A- 2 247 996
- GB-A- 2 276 773
- GB-A- 2 296 998

## Description

This invention relates to glands for sealing around conduits carrying, for example, electrical cables. However, the invention is also applicable to glands for sealing around pipes, cables of optical fibres and conduits for other media.

Cable glands are used in many applications to seal a cable at the boundary between two environments. Most basically, the seal is to be effective against the passage of fluids (e.g. a dangerous gas or moisture) across the boundary. In explosive environments the seal must also be explosion-proof as well. Thus, an additional requirement in hazardous environments is that the seal should also be flame-proof. For this cable glands are known which provide a resilient seal ring that is captured between a gland member, through which the cable passes, and a sealing nut. By tightening the nut onto the member, the seal ring rides over an inner conical surface and is urged radially inwardly into engagement with the cable to create the seal along an extended portion of the cable surface. This is a displacement type seal. European Patent No. 0,515,200, which is considered to represent the closest prior art, discloses a plastics cable gland which is effective against the passage of dust or moisture across the boundary, which includes a displacement type seal.

A typical electrical cable for use in a hazardous environment comprises the inner cable core which is set in a pliable bedding material contained within an inner plastics sheath. The cable is protected by a layer of steel amour wire, tape or braiding and finished with an outer plastics sheath. The cable is prepared for the gland by exposing the inner sheath along a first portion and a length of the protective armour along a second portion. The main seal is effected against the inner sheath, while the cable member is clamped to the armour wire for mechanical rigidity and/or electrical earthing purposes. The seal ring thus bears directly against the inner sheath. A second displacement seal is arranged at the end of the gland to seal the inside of the gland from the ingress of fluids, dust or other contaminants, generally. Occasionally, cable is supplied without the protective armour, in which case the clamping is not used.

Previously, the bedding material has been of sufficient rigidity to withstand the force exerted by the seal ring to provide a good seal. Overtightening of the sealing nut was not perceived as a problem because of the hardness of the bedding material. Increasingly, however the requirements for a flame retardant property of the bedding material has led to various additives being introduced into it, such that it has become significantly softer. If the seal ring is overtightened on a modern, more flame-retardant, cable it can cause the phenomenon of material cold flow under the seal ring. When this happens the effectiveness of the seal itself is undermined as the inner sheath is deformed. In some instances the effect of the seal ring bearing into the inner sheath can cause actual damage.

It will be appreciated that a particular cable gland will often be designed to seal against a range of cable diameters. Thus, while tightening of the sealing nut to a particular degree will be appropriate for a smaller cable diameter, the same degree of tightening will represent a damaging overtightening for a cable of a larger diameter. Of course, the solution is not to overtighten the sealing nut, but this cannot be guaranteed in the many and varied work places where such cable glands are used. The subtleties of the extent to which a gland seal should be tightened are often lost on the operatives into whose hands responsibility for assembly and installation of such cable glands is placed.

It is also known to use a compression seal, as distinct from a displacement seal, in which the seal ring is compressed axially between two surfaces on the gland member and the sealing nut, respectively, so that the seal ring is deformed radially inwardly by squeezing it into sealing contact with the inner sheath of the cable. In effect, the small radius of the surface of the bulge created in the seal ring is pushed into sealing contact with the inner sheath. However, the area of sealing contact created by this radius is significantly less than is achieved in a displacement seal and it suffers from problems of cold flow if it is overtightened.

It is written into electrical standard IEC 60079-14 1996 that such displacement seals shall not be used in cable entry devices where cold flow of the bedding material could take place.

An attempt to address this problem is to use a so-called diaphragm seal. This uses an elastomeric tapered boot which is used in place of the sealing ring. The boot bears only lightly on the inner sheath until an explosion occurs, when it is forced against the inner sheath to create the increased sealing effect required. It is intended that the fit of the boot on the inner sheath should be sufficient to prevent the non-explosive passage of gases or moisture through the gland. However, there is no way of telling that such an initial seal has been created once the gland is assembled without taking it apart. The sealing effect is, in any event, often undermined by the patterning left on the inner sheath by the armour wire or braid when it is peeled back in preparation for assembling the gland on the cable. Not only is the passage of moisture or corrosive fluids, etc. often undesirable in itself, but it can lead to further undermining of the effectiveness of the seal in the presence of an explosion if such moisture is allowed between the inner sheath and the diaphragm seal by an imperfect initial seal. The extent to which a seal may be undermined in this way cannot be known until it is put to use in an explosion, by which time it is clearly too late.

Another problem with such a diaphragm seal is that it has a tendency to invert on smaller diameter cables, relative to the range of sizes it is designed to accept, during assembly of the gland. To address this the boot can be made harder or thicker. The former is less prone to seal and the latter limits the range of cables on which the same gland can be used.

A stiff plastics insert can be used inside the boot by which it is maintained in its proper orientation. However, the insert weakens the boot by necessitating a significant reduction in the thickness of the boot material to accommodate it. The boot is then more likely to be damaged during assembly. Again, there is no way of telling if such damage has occurred without dismantling the gland.

A cable gland is needed that ensures an acceptable sealing contact is created regardless of the level of experience of the installer.

As stated above, the cable gland will typically include a clamp for engaging the armour. This may be a conical metal member against which the exposed armouring is laid. A sleeve clamp is tightened onto the conical member to clamp the armour in between. The sleeve has an internal taper that matches the angle of the conical member. It has been recognised by the inventors that use of cable glands often involves the mistake of putting the sleeve on the wrong way round so that its sharp outer corner bites into the armouring. This is less effective in clamping and can even cut through thinner armouring, such as the braid.

The sleeve clamp is also prone to falling out of the gland body during assembly. The sleeve must be held in place while the gland nut is offered up to it. This increases the difficulty of gland assembly as one hand may be required for holding the sleeve in place until the nut is sufficiently advanced onto the body for it to hold the sleeve in place itself.

The present invention is intended to address and at least alleviate some or all of the above problems associated with prior art sealing glands.

According to one aspect of the invention there is provided a gland assembly for a conduit, comprising a gland member defining a bore for the conduit, a seal ring received within the gland member against a surface, a bearing member engaged with the gland member which is movable to exert a force to urge the seal ring towards said surface and to deform the seal ring into engagement with the conduit, characterised in that a compensating member is arranged in the gland member, which compensating member is arranged in relation to the seal ring to absorb a proportion of the force exerted by the bearing member.

According to one embodiment the compensating member defines the surface which is movable and against which the seal ring bears. The compensating member yielding as increasing force is applied to the seal. Thus, the force of the seal in sealing contact can be limited or maintained substantially constant by some of the force from the bearing member being dissipated in deforming the compensating member.

The compensating member can be arranged to yield by virtue of its stiffness created in the shape and structure of the member itself or in the hardness of the material used relative to the hardness of the material used for the seal ring.

According to another embodiment there is provided a gland assembly for an armoured conduit which comprises an inner conduit and an outer armour layer, the gland assembly comprising a gland member defining a bore for the conduit, an armour cone also defining a bore for the conduit and being mounted in the gland member to receive the armour layer, a clamping ring which is tapered from an outer to an inner diameter and is arranged on the cone to clamp the armour layer between the ring and the cone, the assembly further comprising a gland sleeve engaged with the gland member which is movable to exert a force to urge the clamping ring along the cone to clamp the armour layer between them, wherein the clamping ring is tapered from the outer diameter at either end to the inner diameter.

Accordingly, the problems associated with single tapers on clamping rings are avoided as the clamping ring of the invention can be fitted in either direction to equal effect.

According to a further embodiment there is provided a gland assembly for an armoured conduit which comprises an inner conduit and an outer armour layer, the gland assembly comprising a gland member for bearing the conduit, a first armour clamp member defining an aperture for the inner conduit and being mounted in the gland member to receive the armour layer, a second armour clamp member arranged in relation to the first armour clamp member to clamp the armour layer between them, and a gland sleeve engaged with the gland member and movable to exert a force to urge the first and second clamping members together, wherein the second clamping member is mechanically retained in said gland sleeve.

The problems associated with having to hold the second clamping member in place while the gland is assembled are avoided according to this embodiment invention. Preferably, the means by which the second clamping member are retained include a recess in the gland member in which the second clamp member is an interference fit.

Typically, the second clamp member is a clamping ring fitted in an annular recess in the gland sleeve. It will be appreciated that other forms of mechanical retention of the second clamping member could be used, such as by gluing or screwing the second clamping member in place.

The present invention can be put into practice in various ways, some of which will now be described by way of example with reference to the accompanying drawings, in which:
Figure 1 is a section of a disassembled cable gland according to the invention;
Figure 2 is a section of the cable gland of Figure 1 in assembled form;
Figure 3 is a section of the cable gland in Figure 1 bearing a cable of small diameter;
Figure 4 is a section of the cable gland of Figure 1 in assembled form bearing a cable of large diameter; and
Figures 5-7 are sections of alternative forms of spacer for the gland of Figure 1.

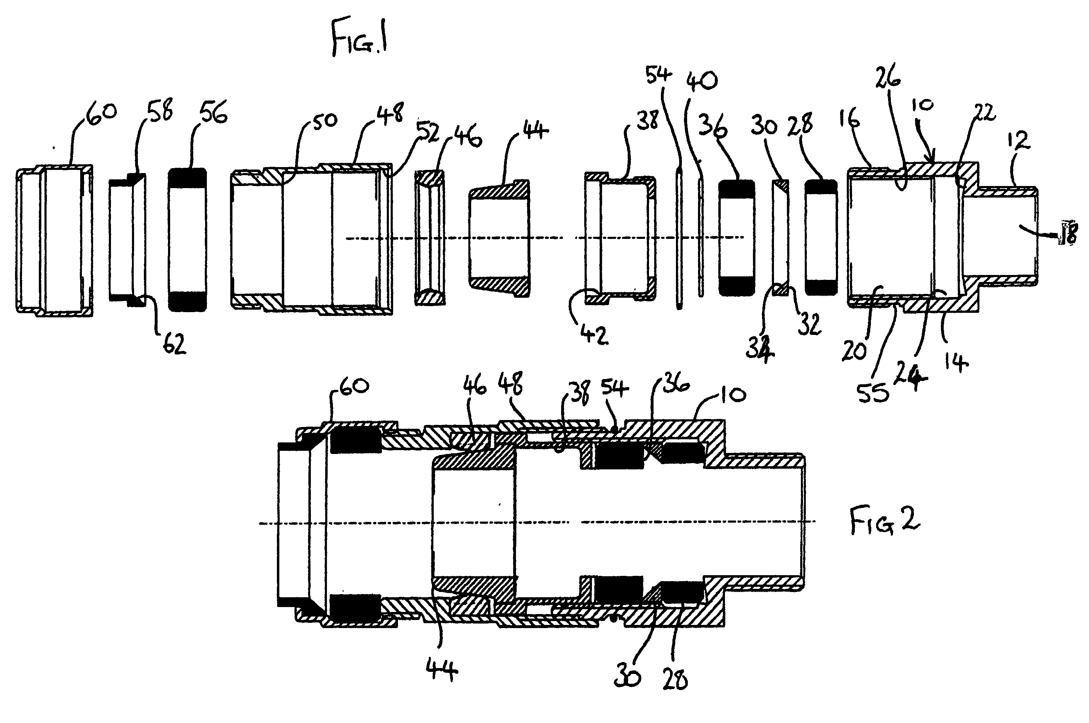

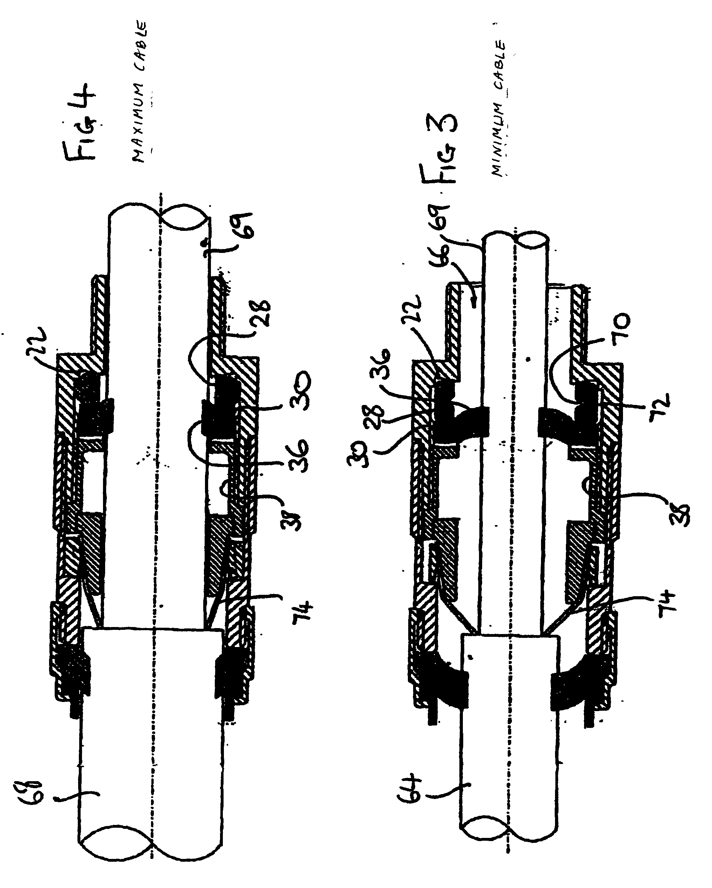

Referring to Figures 1 and 2 of the drawings, a cable gland of an electrical cable comprises a brass gland member 10 having an external thread 12 at one end which is designed to be received in the wall of a housing into which the electrical cable is to extend. The gland member 10 has a hexagonal middle portion 14 and an externally threaded other end 16.

A circular bore through the gland member has a straight sided portion 18 opposite the externally threaded portion 12 and a larger diameter portion 20 leading therefrom. A shoulder 22, formed at the junction of the two bores, is not perpendicular to the axis of the bore itself, but is slanted away from the larger bore portion 20 so that it defines an acute angled recess. It will also be noted that the larger bore 20 defines a first region 24 and a second internally threaded main region 26 which is of slightly smaller diameter.

A resilient spacer 28 is received in the recess adjacent the first region 24. The outer diameter of the spacer 28 is about that of the main region 26. A triangular section brass guide ring 30 is received in the bore next to the spacer 28 in the main region 26. The guide ring 30 has an oblique face 32 adjacent the spacer 28 and a chamfered face 34. An elastomeric displacement seal 36 is also received in the main region 26 of the bore against the chamfered face 34. A brass compression nut 38 is engaged with the internal thread of the main region 26. The compression nut 38 has a perpendicular end face which abuts the seal 36 through an intermediate flat brass washer 40. These are the inner seal components of the gland which engage the inner sheath of the prepared cable as will be described below.

The compression nut 38 also forms a perpendicular internal annular shoulder 42 which forms the abutment for an armour cone 44 which has an outer surface that tapers inwardly away from the shoulder 42. A brass armour clamping ring 46 is received on the taper of the cone. The inner surface of the ring 46 is equally tapered in both axial directions from an inner diameter and can be received on the cone 44 either way round to equal effect. The purpose of the ring is to clamp the armour wire or braid to the cone as will also be described below.

The armour ring 46 is tightened onto the armour cone 44 by a brass gland sleeve 48 which has an internal thread which engages an external thread on the gland member 10. An internal perpendicular shoulder 50 on the sleeve 48 engages the edge of the armour ring 46 as the sleeve 48 is advanced. This urges the armour ring along the cone.

A first portion 52 of the gland sleeve 48 is machined to a smooth bore finish in front of the internal thread. When the sleeve is fully home on the gland member, an O-ring seal 54 is caught between the smooth surface and the surface of a circular recess 55 formed in the outside of the gland member 10 over which the gland sleeve rides. This seals the components of the gland from moisture etc entering through the otherwise exposed threads.

An outer elastomeric seal 56 is mounted up against an end surface of the gland sleeve. A second plastics guide ring 58 is mounted in a brass end nut 60 which has an internal thread which engages the end of the gland sleeve 48. The guide ring 58 has a chamfered surface 62 facing the outer seal 56. As the end nut 60 is tightened onto the gland sleeve 48, the chamfered surface 62 urges the outer seal 56 into sealing contact with the outer sheath of the cable to seal the gland from moisture, etc. from entering from this direction.

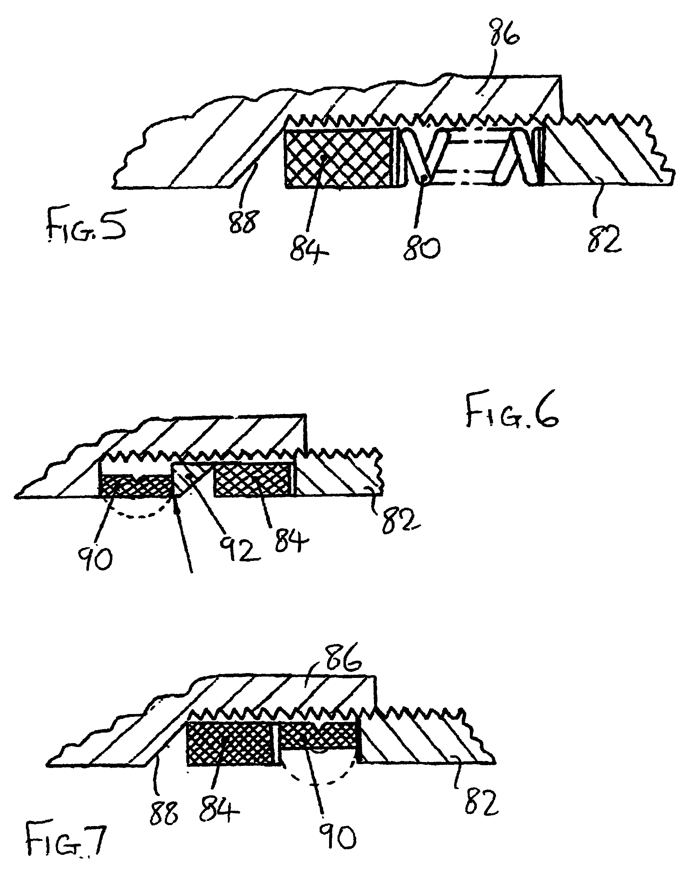

Figure 3 shows the gland of Figure 1 in the fully assembled state with a small diameter cable 64 arranged in the bore 66 defined by the components. The gland compression nut 38 is fully drawn onto the gland member. It will be seen that the seal ring 36 is displaced axially and radially inwardly along the chamfered face of the guide ring 30 and into sealing contact with the exposed inner sheath 69 of the cable. The spacer 28 has suffered substantially no distortion as a result of the force applied to the seal because the relatively small diameter inner sheath provides resistance to radial movement of the seal ring only at the end of the axial movement of the compression nut 38 onto the gland member 10. As a result, while the compression nut is fully engaged with the gland member, the spacer remains substantially undistorted.

In contrast, in Figure 4 the large diameter inner sheath 69 of the relatively large diameter cable, which the same cable gland is arranged to seal provides resistance to the radially inward movement of the displaced seal ring 36 almost immediately. However, the compression nut is, again, fully drawn onto the gland member. While the degree to which the compression nut 38 is engaged with the gland member would be considered overtightening in a prior art cable gland, the force which would otherwise create damage in the inner sheath 69 of the cable in Figure 4, is absorbed by the spacer 28 which has been distorted due to the resistance experienced by the seal ring to being displaced radially inwardly. The spacer 28 is formed with a circular notch 70 on its inner surface which causes it to deform radially outwardly into the gap 72 between it and the surrounding wall of the gland member.

The spacer 28 is also held captive in its position by the inclined nature of the abutment 22 providing a recess from which the spacer cannot escape. In this way, the spacer is kept out of engagement with the inner sheath of the cable as it is arranged to distort radially outwardly. The force applied to the compression nut is redirected axially and absorbed by the spacer as opposed to being applied to the seal ring as would be the case if the surface against which the seal ring bears to be guided radially inwardly were not movable.

The spacer may be a resilient member of a hardness that is chosen relative to the deformability of the seal ring. However, it may otherwise be shaped as well, or in the alternative, to yield in a similar manner. It may have a lattice or other reticular or cellular structure.

Assembly of the cable gland is as follows. The gland member 10 is screwed into the aperture in the boundary member (not shown) through which the cable core is to pass. The rest of the cable gland is then loosely assembled as it is shown in Figure 2 up to the arrangement of the armour cone in the compression nut. The loosely assembled end nut is mounted on the gland sleeve, with the clamp ring inserted in it. This partial assembly of the end nut and the gland sleeve is threaded over the prepared cable having a first portion comprising the exposed cables to the required length, the exposed inner sheath portion and the exposed armour wire portion. The inner sheath portion extends from the armour wire portion sufficiently so that the minimum inner sheath portion projects beyond the seal ring. The armour wire is then flared so that it lies on the outside of the armour cone. The compression nut is then tightened to displace the seal ring into sealing engagement with the inner sheath. As mentioned previously, the degree to which the nut is tightened for a given diameter of inner sheath is not critical because the yielding of the spacer compensates for the advancement of the compression nut. Thus, regardless of the diameter of the inner sheath of cable to be sealed, the compression nut is always fully drawn onto the gland member while relying on the distortion of the spacer to avoid damaging sealing forces being applied to the inner sheath by the seal ring. It can be arranged that the compression nut is drawn up fully into the cable gland body in all circumstances as long as the spacer is designed to yield sufficiently once the suitable sealing force is applied to the inner sheath.

Thereafter, the armour ring mounted in the gland sleeve is then brought over the armour wire 74 which lies on the outer surface of the cone. Because the sleeve has a tendency to become misaligned, or simply to fall out in the assembly process the invention uses an interference fit between it and the inner surface of the gland sleeve recess in which it sits against the perpendicular shoulder. The armour ring can then be accurately and reliably offered up to the rest of the gland assembly as the gland body mates with the compression nut. Because the armour sleeve is double ended its correct fitting is assured.

When the armour wire is clamped between the armour cone and the gland body, the end nut is tightened to draw the chamfered end guide ring towards the outer seal which is displaced so that it comes into sealing engagement with the outer sheath. Because the gland sleeve is always fully drawn on to the gland member the o-ring always forms a seal.

Figure 5 shows an alternative spacer 80 which is in the form of a helical spring. In this embodiment the spacer is arranged between gland member 82 and the displacement seal 84. It will be noted that the gland member has an external thread that engages a complimentary internal thread on the compression nut 86. Also, the guide ring of the previous embodiment is integral as a guide surface 88 on the inside of the compression nut 86. As before, the resilient spacer is designed to yield partly according to the resistance to radially inward progression put up by the inner sheath into which it comes into contact, to absorb a proportion of the force exerted in the act of tightening the compression nut.

Figure 6 shows another form of the invention in which the spacer 90 is formed with an annular notch on its outer surface such that it will yield radially inwardly. As with the embodiment of Figure 1, the spacer 90 and its guide ring 92 could be formed as a unitary member. In this case the design of the shape of the spacer part is of particular importance because of the need to put a lower limit on the softness of the guide ring part.

Figure 7 shows a further embodiment of the invention which is an amalgamation of those in Figures 5 and 6. The spacer 90 from Figure 6 is used in the position of the spring 80 of Figure 5.

While the invention has been described in connection with the illustrative embodiment discussed above, those skilled in the art will recognise that many variations may be made without departing from the present invention. For example, the compensating member may be a helical spring, or an annular wishbone-type spring (such as that formed from an annular spacer with an annular notch on a surface). Furthermore, the compensating member can be arranged to either side of the seal ring as long as it is arranged to absorb a proportion of the force exerted by the bearing member by which the seal is deformed, thereby limiting the sealing force exerted by the seal ring. As mentioned previously, the invention is not limited to sealing for electrical cables, but is applicable to various conduits. The materials used for the assembly will vary according to the application. For example, steel or copper could be used in place of brass. Some glands can be made of plastics or composite components. The clamp ring for the protective armour may be a push-and-turn fitting or other mechanical retention in place of the interference fit.

## Claims

1. A gland assembly for a conduit, comprising a gland member (10) defining a bore (18) for the conduit, a seal ring (36) received within the gland member (10) against a surface (34), a bearing member (38) engaged with the gland member (10) which is movable to exert a force to urge the seal ring (36) towards said surface and to deform the seal ring into engagement around the conduit, **characterised in that** a compensating member (28) is arranged in the gland member (10), which compensating member (28) is arranged in relation to the seal ring (36) to absorb a proportion of the force exerted by the bearing member (38).

2. An assembly as claimed in claim 1 wherein the compensating member (28) is made of an elastomeric material such that it yields to absorb the proportion of the force exerted by the bearing member (38).

3. An assembly as claimed in claim 2, wherein the hardness of the elastomeric material is greater than that of the seal ring (36).

4. An assembly as claimed in any of claims 1 to 3, wherein the compensating member (28) is adapted to yield in a predetermined direction according to its shape.

5. An assembly as claimed in claim 4, wherein the compensating member (28) is adapted to yield in a direction away from the conduit.

6. An assembly as claimed in any preceding claim, wherein the compensating member (28) is adjacent to a seal ring displacement guide (30).

7. An assembly as claimed in any preceding claim, wherein the gland member (10) defines an annular abutment (22) against which abutment the compensating member (28) is received.

8. An assembly as claimed in claim 7, wherein the abutment (22) defines a recess for trapping the compensating member (28).

9. An assembly as claimed in claim 8, wherein the abutment (22) extends radially outwardly and away from the bearing member.

10. An assembly as claimed in any preceding claim in which the compensating member (28) defines said surface, which surface is movable according to the force exerted by the bearing member (38).

11. A gland assembly as claimed in any preceding claim for an armoured conduit which comprises an inner conduit and an outer armour layer (74), the gland assembly additionally comprising a gland member (10) defining a bore (18) for the conduit, an armour cone (44) also defining a bore for the conduit and being mounted in the gland member (10) to receive the armour layer (74), a clamping ring (46) which is tapered from an outer to an inner diameter and is arranged on the cone (44) to clamp the armour layer between the ring (46) and the cone (44), and a gland sleeve (48) engaged with the gland member (10) which is movable to exert a force to urge the clamping ring (46) along the cone (44) wherein to clamp the armour layer (74) between them, wherein the clamping ring (46) is tapered from the outer diameter at either end to the inner diameter.

12. An assembly as claimed in claim 11 in which the clamping ring (46) is received in a recess in the gland sleeve (48) defining an abutment (50) which engages the clamping ring (46) to urge it along the cone (44).

13. An assembly as claimed in claim 12 in which the clamping ring (46) is mechanically retained in the recess.

14. An assembly as claimed in claim 13 in which the clamping ring (46) is an interference fit in the recess.

15. A gland assembly as claimed in any of claims 1 to 10 for an armoured conduit which comprises an inner conduit and an outer armour layer (74), the gland assembly additionally comprising a gland member (10) for bearing the conduit, a first armour clamp member defining an aperture for the inner conduit and being mounted in the gland member (10) to receive the armour layer (74), a second armour clamp member arranged in relation to the first armour clamp member to clamp the armour layer between them and a gland sleeve (48) engaged with the gland member (10) and movable to exert a force to urge the first and second clamping members together, wherein the second clamping member is mechanically retained in the gland sleeve (48).

16. An assembly as claimed in claim 15 in which the second clamping member is received in a recess in the gland sleeve (48) which defines an abutment (50) which engages the second clamping member.

17. An assembly as claimed in claim 16, wherein the second clamping member is an interference fit in the recess.

## Patentansprüche

1. Stopfbuchsenanordnung für eine Leitung, welche aufweist: ein Stopfbuchsenelement (10), das eine Bohrung (18) für die Leitung umgrenzt, emen Abdichtring (36), der in dem Stopfbuchsenelement (10) gegen eine Oberfläche (34) anliegend aufgenommen ist, ein Lagerungselement (38) im Eingriff mit dem Stopfbuchsenelement (10), das beweglich ist, um eine Kraft auszuüben, um den Abdichtring (36) in Richtung der Oberfläche zu drängen und ihn im Eingriff um die Leitung zu verformen, **dadurch gekennzeichnet, dass** in dem Stopfbuchsenelement (10) ein Ausgleichselement (28) angeordnet ist, wobei das Ausgleichselement (28) in Bezug auf den Abdichtnng (36) derart angeordnet ist, dass es einen Teil der Kraft, die durch das Lagerungselement (38) ausgeübt wird, absorbiert.

2. Anordnung nach Anspruch 1, wobei das Ausgleichselement (28) aus einem elastomeren Werkstoff hergestellt ist, so dass es nachgibt, um einen Teil der von dem Lagerungselement (38) ausgeübten Kraft zu absorbieren.

3. Anordnung nach Anspruch 2, wobei die Härte des elastomeren Werkstoffs größer als jene des Abdichtrings (36) ist.

4. Anordnung nach einem der Ansprüche 1 bis 3, wobei das Ausgleichselement (28) so beschaffen ist, dass es entsprechend seiner Form in einer festgelegten Richtung nachgibt.

5. Anordnung nach Anspruch 4, wobei das Ausgleichselement (28) so beschaffen ist, dass es in einer Richtung nachgibt, die von der Leitung wegweist.

6. Anordnung nach einem der vorhergehenden Ansprüche, wobei das Ausgleichselement (28) an eine Abdichtnng-Verlagerungsführung (30) angrenzend angeordnet ist.

7. Anordnung nach einem der vorhergehenden Ansprüche, wobei das Stopfbuchsenelement (10) einen ringförmigen Anschlag (22) festlegt, woran anliegend das Ausgleichselement (28) aufgenommen ist.

8. Anordnung nach Anspruch 7, wobei der Anschlag (22) eine Aussparung abgrenzt, in die das Ausgleichselement (28) geklemmt ist.

9. Anordnung nach Anspruch 8, wobei sich der Anschlag (22) radial nach außen und von dem Lagerungselement weg erstreckt.

10. Anordnung nach einem der vorhergehenden Ansprüche, wobei das Ausgleichselement (28) die Oberfläche festlegt, die entsprechend der Kraft, die durch das Lagerungselement (38) ausgeübt wird, beweglich ist.

11. Stopfbuchsenanordnung nach einem der vorhergehenden Ansprüche für eine armierte Leitung, die eine innere Leitung und eine äußere Armierungslage (74) aufweist, wobei die Stopfbuchsenanordnung außerdem ein Stopfbuchsenelement (10), das eine Bohrung (18) für die Leitung umgrenzt, einen Armierungskegel (44), der ebenfalls eine Bohrung für die Leitung umgrenzt und in dem Stopfbuchsenelement (10) angebracht ist, um die Armierungslage (74) aufzunehmen, einen Klemmring (46), der sich von einem Außen- zu einem Innendurchmesser hinverjüngt und auf dem Kegel (44) angeordnet ist, um die Armierungslage zwischen dem Ring (46) und dem Kegel (44) festzuklemmen, und im Eingnff mit dem Stopfbuchsenelement (10) eine Stopfbuchsenmuffe (48), die beweglich ist, um eine Kraft auszuüben, die den Klemmring (46) entlang des Kegels (44) festklemmt, wobei dazwischen die Armierungslage (74) festgeklemmt wird, wobei sich der Klemmring (46) von dem Außendurchmesser an einem Ende zu dem Innendurchmesser hinverjüngt, aufweist.

12. Anordnung nach Anspruch 11, wobei der Klemmring (46) in einer Aussparung in der Stopfbuchsenmuffe (48) aufgenommen ist, die einen Anschlag (50) festlegt, der mit dem Klemmring (46) in Eingnff gelangt, um ihn den Kegel (44) entlang zu drängen.

13. Anordnung nach Anspruch 12, wobei der Klemmring (46) mechanisch in der Aussparung gehalten wird.

14. Anordnung nach Anspruch 13, wobei der Klemmring (46) in einem Presssitz in der Aussparung ist.

15. Stopfbuchsenanordnung nach einem der Ansprüche 1 bis 10 für eine armierte Leitung, die eine innere Leitung und eine äußere Armierungslage (74) aufweist, wobei die Stopfbuchsenanordnung außerdem ein Stopfbuchsenelement (10) für die Lagerung der Leitung, ein erstes Armierungsklemmelement, das eine Öffnung für die innere Leitung umgrenzt und in dem Stopfbuchsenelement (10) angebracht ist, um die Armierungslage (74) aufzunehmen, ein zweites Armierungsklemmelement, das in Bezug auf das erste Armierungsklemmelement so angeordnet ist, dass die Armierungslage dazwischen geklemmt wird, und im Eingriff mit dem Stopfbuchsenelement (10) eine Stopfbuchsenmuffe (48), die beweglich ist, um eine Kraft auszuüben, die das erste und zweite Klemmelement zusammendrängt, wobei das zweite Klemmelement in der Stopfbuchsenmuffe (48) mechanisch zurückgehalten wird, aufweist.

16. Anordnung nach Anspruch 15, wobei das zweite Klemmelement in einer Aussparung in der Stopfbuchsenmuffe (48) aufgenommen ist, die einen Anschlag (50) festlegt, der mit dem zweiten Klemmelement in Eingnff gelangt.

17. Anordnung nach Anspruch 16, wobei das zweite Klemmelement in einem Presssitz in der Aussparung ist.

## Revendications

1. Ensemble à presse-étoupe pour une conduite, comprenant un élément formant presse-étoupe (10) définissant un orifice (18) pour la conduite, une bague d'étanchéité (36) reçue à l'intérieur de l'élément formant presse-étoupe (10) contre une surface (34), un élément d'appui (38) engagé sur l'élément formant presse-étoupe (10) et qui peut être déplacé pour exercer une force pour presser la bague d'étanchéité (36) vers ladite surface et déformer la bague d'étanchéité en engagement autour de la conduite, **caractérisé en ce qu'**un élément de compensation (28) est aménagé dans l'élément formant presse-étoupe (10), lequel élément de compensation (28) est aménagé par rapport à la bague d'étanchéité (36) pour absorber une proportion de la force exercée par l'élément d'appui (38).

2. Ensemble selon la revendication 1, dans lequel l'élément de compensation (28) est constitué d'un matériau élastomère de sorte qu'il fléchisse pour absorber la proportion de la force exercée par l'élément d'appui (38).

3. Ensemble selon la revendication 2, dans lequel la dureté du matériau élastomère est supérieure à celle de la bague d'étanchéité (36).

4. Ensemble selon l'une quelconque des revendications 1 à 3, dans lequel l'élément de compensation (28) est à même de fléchir dans une direction prédéterminée en fonction de sa forme.

5. Ensemble selon la revendication 4, dans lequel l'élément de compensation (28) est à même de fléchir dans une direction s'écartant de la conduite.

6. Ensemble selon l'une quelconque des revendications précédentes, dans lequel l'élément de compensation (28) est adjacent à un guide (30) de déplacement de la bague d'étanchéité (30).

7. Ensemble selon l'une quelconque des revendications précédentes, dans lequel l'élément formant presse-étoupe (10) définit une butée annulaire (22) contre laquelle l'élément de compensation (28) est reçu.

8. Ensemble selon la revendication 7, dans lequel la butée (22) définit un évidement pour piéger l'élément de compensation (28).

9. Ensemble selon la revendication 8, dans lequel la butée (22) s'étend radialement vers l'extérieur et en s'écartant de l'élément d'appui.

10. Ensemble selon l'une quelconque des revendications précédentes, dans lequel l'élément de compensation (28) définit ladite surface, laquelle surface peut être déplacée en fonction de la force exercée par l'élément d'appui (38).

11. Ensemble à presse-étoupe selon l'une quelconque des revendications précédentes pour conduite blindée, qui comprend une conduite interne et une couche de blindage externe (74), l'ensemble à presse-étoupe comprenant en outre un élément formant presse-étoupe (10) définissant un orifice (18) pour la conduite, un cône de blindage (44) définissant également un orifice pour la conduite et étant monté dans l'élément formant presse-étoupe (10) pour recevoir la couche de blindage (74), une bague de serrage (46) qui s'amincit en cône d'un diamètre externe à un diamètre interne et est aménagée sur le cône (44) pour serrer la couche de blindage entre la bague (46) et le cône (44), et un manchon de presse-étoupe (48) engagé sur l'élément formant presse-étoupe (10) qui peut être déplacé pour exercer une force pour presser la bague de serrage (46) le long du cône (44) de manière à serrer la couche de blindage (74) entre eux, la bague de serrage (46) étant amincie en cône du diamètre externe, à l'une ou l'autre extrémité, au diamètre interne.

12. Ensemble selon la revendication 11, dans lequel la bague de serrage (46) est reçue dans un évidement ménagé dans le manchon de presse-étoupe (48) définissant une butée (50) qui s'engage sur la bague de serrage (46) pour la presser le long du cône (44).

13. Ensemble selon la revendication 12, dans lequel la bague de serrage (46) est retenue mécaniquement dans l'évidement.

14. Ensemble selon la revendication 13, dans lequel la bague de serrage (46) est un joint à ajustement serré dans l'évidement.

15. Ensemble à presse-étoupe selon l'une quelconque des revendications 1 à 10, pour une conduite blindée, qui comprend une conduite interne et une couche de blindage externe (74), l'ensemble à presse-étoupe comprenant en outre un élément formant presse-étoupe (10) pour supporter la conduite, un premier élément de serrage de blindage définissant une ouverture pour la conduite interne et étant monté dans l'élément formant presse-étoupe (10) pour recevoir la couche de blindage (74), un second élément de serrage de blindage aménagé en relation avec le premier élément de serrage de blindage pour serrer la couche de blindage entre eux, et un manchon de presse-étoupe (48) engagé sur l'élément formant presse-étoupe (10) et pouvant être déplacé pour exercer une force pour presser ensemble les premier et second éléments de serrage, le second élément de serrage étant retenu mécaniquement dans le manchon de presse-étoupe (48).

16. Ensemble selon la revendication 15, dans lequel le second élément de serrage est reçu dans un évidement du manchon de presse-étoupe (48) qui définit une butée (50) qui s'engage sur le second élément de serrage.

17. Ensemble selon la revendication 16, dans lequel le second élément de serrage est un joint à ajustement serré dans l'évidement.
